# FASCICULE DE BREVET EUROPEEN

(11) **EP 4 334 633 B1**
(45) Date de publication et mention de la délivrance du brevet: **04.11.2026**
(21) Numéro de dépôt: 22720330.4
(22) Date de dépôt: 31.03.2022
(51) Int. Cl.: F17C 3/08, F17C 9/00

(54) **DISPOSITIF DE STOCKAGE ET DE FOURNITURE DE FLUIDE CRYOGÉNIQUE, NOTAMMENT D'HYDROGÈNE LIQUÉFIÉ**
VORRICHTUNG ZUR LAGERUNG UND BEREITSTELLUNG EINES KRYOGENEN FLUIDS, INSBESONDERE VON VERFLÜSSIGTEM WASSERSTOFF
DEVICE FOR STORING AND SUPPLYING CRYOGENIC FLUID, IN PARTICULAR LIQUEFIED HYDROGEN

(30) Priorité: 07.05.2021 FR 2104825
(43) Date de publication de la demande: 13.03.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FAYER, Thomas, 38360 SASSENAGE (FR)
(74) Mandataire: Air Liquide
(86) Numéro de dépôt international: PCT/EP2022/058561
(87) Numéro de publication internationale: WO 2022/233505

(56) Documents cités:
- WO-A1-2016/172430
- FR-A1- 3 006 742
- FR-A1- 3 051 457
- KR-A- 20010 109 585
- US-A1- 2018 229 602

## Description

L'invention concerne un dispositif de de stockage et de fourniture de fluide cryogénique.

L'invention concerne plus particulièrement un dispositif de de stockage et de fourniture de fluide cryogénique, notamment d'hydrogène liquéfié, comprenant un réservoir délimitant un volume de stockage de fluide, le réservoir comprenant un circuit de soutirage comprenant une conduite de soutirage de liquide ayant une première extrémité reliée à une portion inférieure du réservoir et une seconde extrémité destinée à être reliée à un organe de réception du fluide, le dispositif comprenant en outre un système de pressurisation du réservoir comprenant une conduite de pressurisation de fluide reliant les parties inférieure et supérieure du réservoir et munie d'un organe de réchauffage de fluide configuré pour prélever du liquide, le réchauffer et le réinjecter dans le réservoir, un ensemble de plaques prévu pour limiter ou guider le déplacement de fluide dans le réservoir, l'ensemble de plaques comprenant une pluralité de premières plaques espacées verticalement et s'étendant selon une direction horizontale lorsque le réservoir est en position d'utilisation.

Un tel dispositif est décrit par le document FR3051457A1.

Le stockage de l'hydrogène sous forme liquéfié associé à une pompe est une solution de stockage et de fourniture d'hydrogène dans de nombreuses applications.

Les pompes cryogéniques utilisées peuvent être soumises à des problèmes de cavitation à l'admission (bulles dans l'écoulement). Cette problématique est d'autant plus importante pour les fluides cryogéniques légers où la molécule est proche du point de vapeur saturante et ne bénéficiant pas de hauteur manométrique importante (densité faible) pour assurer un bon différentiel entre la pression absolue totale du liquide et sa pression de vapeur saturante (« NPSH » pour « Net Positive Suction Head » en anglais).

Pour résoudre ce problème diverses solutions sont connues, par exemple, augmenter la hauteur manométrique en amont de pompe (réservoir vertical). D'autres solutions consistent à ajouter un dispositif de pressurisation au stockage source, ajouter un pot séparateur de phase en amont de la pompe.

Les solutions connues ne sont pas toujours satisfaisantes.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que la conduite de soutirage de liquide comprend une pompe et en ce que l'ensemble de plaques comprend en outre une ou plusieurs secondes plaques s'étendant selon une direction verticale lorsque le réservoir est en position d'utilisation et reliée(s) aux premières plaques.

Par ailleurs, des modes de réalisation de l'invention peuvent comporter l'une ou plusieurs des caractéristiques suivantes :
- le dispositif comprend une pluralité de secondes plaques espacées selon la direction horizontale,
- les premières plaques s'étendent sur une majorité de la section horizontale du volume du réservoir et sont espacées de la paroi formant le réservoir sur au moins une partie de leur périphérie,
- l'espacement vertical des premières plaques est croissant du haut vers le bas du réservoir,
- la ou les secondes plaques s'étendent sur une majorité de la section verticale du volume du réservoir et sont espacées de la paroi formant le réservoir sur au moins une partie de leur périphérie,
- les plaque ont une épaisseur comprise entre 0,1mm et 1mm,
- les plaque sont composées de l'un au moins des matériaux parmi : plastique, PTFE, PCTFE, aluminium, inox, acier austénitique notamment compatibles avec l'hydrogène.
- au moins une partie des plaques comportent des orifices,
- l'ensemble de plaques est fixé rigidement au réservoir par exemple par l'un au moins parmi : soudage, serrage, vissage. L'invention peut concerner également tout dispositif alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue longitudinale de côté, en coupe, schématique et partielle, illustrant un premier exemple de réalisation du dispositif selon l'invention,
[Fig. 2] représente une section transversale, schématique et partielle, du dispositif précité,
[Fig. 3] représente une vue en perspective, schématique et partielle, d'une première plaque du dispositif précité.

Le dispositif 14 de stockage et de fourniture de fluide cryogénique illustré peut contenir par exemple de l'hydrogène liquéfié.

Le dispositif 14 comprend un réservoir 1 délimitant un volume de stockage de fluide. Ce réservoir est un réservoir cryogénique isolé thermiquement, par exemple un réservoir à double parois isolé sous vide.

Le dispositif 14 comprend un circuit de soutirage comprenant une conduite 4 de soutirage de liquide ayant une première extrémité reliée à la partie inférieure du réservoir 1 et une seconde extrémité destinée à être reliée à un organe de réception du fluide.

La conduite de soutirage 4 comprend un ensemble de vannes 12, 13 et une pompe 5.

Le dispositif 14 comprend en outre un système de pressurisation du réservoir 1 muni d'une conduite 11, 8 de pressurisation de fluide reliant les parties inférieure et supérieure du réservoir 1. La conduite 11, 8 de pressurisation comprend un organe 10, 7 de réchauffage de fluide configuré pour prélever du liquide, le réchauffer et le réinjecter dans le réservoir 1.

Dans l'exemple illustré, le système de pressurisation comprend une conduite 8 reliant une sortie de la pompe 5 à la partie supérieure su réservoir 1, via un échangeur 7 de chaleur (par exemple en échange de chaleur avec un circuit 16 de fluide et une autre conduite 11 reliant les parties basse et haute du réservoir via un échangeur 10 ou réchauffeur.

C'est-à dire que, pour pressuriser le réservoir, du liquide peut être prélevé, chauffé puis réintroduit dans le réservoir 1 soit via la conduite 4 de soutirage munie de la pompe 5 et la conduite 8, soit via une conduite 11 distincte dédiée. Bien entendu, le dispositif pourrait comprendre un seul de ces deux systèmes de pressurisation.

Dans son volume de stockage le réservoir 1 comprend un ensemble de plaques 2, 3 prévu pour limiter ou guider le déplacement de fluide dans le réservoir 1. Cet ensemble de plaques comprend une pluralité de premières plaques 2 espacées verticalement qui s'étendent selon une direction horizontale lorsque le réservoir 1 est en position d'utilisation (le réservoir 1 est de préférence un réservoir de forme générale cylindrique et horizontal). L'espacement vertical des premières plaques 2 peut être constant ou variable, par exemple croissant (ou décroissant) du haut vers le bas du réservoir 1. Ceci permet d'assurer un labyrinthe plus efficace dans les parties à plus fort gradient de température dans le gaz au niveau de réinjections de gaz chaud fourni par le ou les systèmes de pressurisation.

L'ensemble de plaques 2, 3 comprenant en outre une et de préférence plusieurs secondes plaques 3 s'étendant selon une direction verticale lorsque le réservoir 1 est en position d'utilisation et de préférence reliées rigidement aux première plaques 2. Les secondes plaques 3 sont espacées selon la direction horizontale.

L'ensemble de plaques forme des labyrinthes pour le fluide qui limitent le rebrassage du liquide sous-refroidi pressurisé en partie basse et le gaz surchauffé issu du système de pressurisation en parte haute. Le liquide ainsi pressurisé sera ainsi admis à la pompe 5 via une ligne de soutirage 4 dans des conditions idéales pour éviter la cavitation (NPSH disponible élevé).

Les plaques 2, 3 limitent les échanges de masses et d'énergie entre la phase liquide et la phase gaz du réservoir 1, notamment dans le cas d'accélération ou d'inclinaison du réservoir.

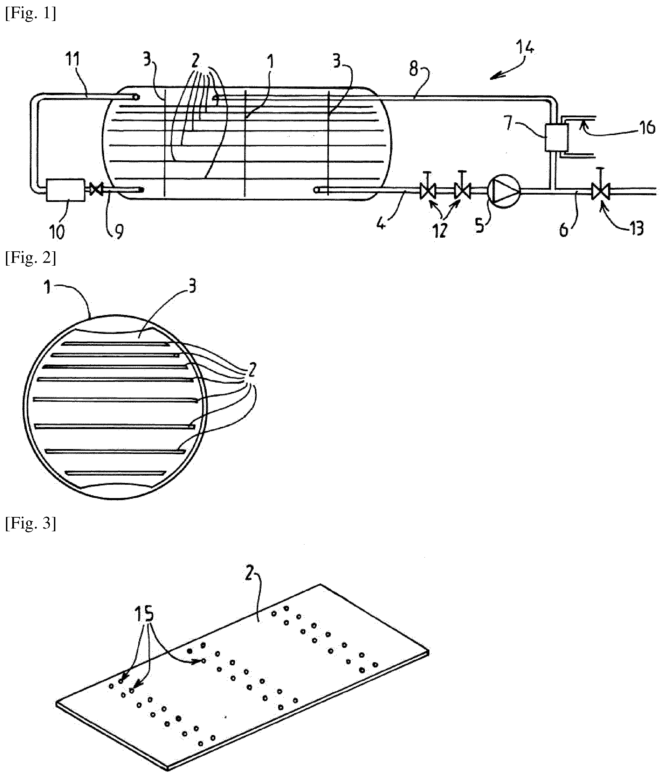

Comme visible à la [Fig. 2], les premières plaques 2 peuvent s'étendre sur une majorité de la section horizontale du volume du réservoir 1 et peuvent être espacées de la paroi formant le réservoir 1 sur au moins une partie de leur périphérie.

De même, la ou les secondes plaques 3 (par exemple au nombre de deux, trois, quatre ou plus) peuvent s'étendre sur une majorité de la section verticale du volume du réservoir 1. Ces secondes plaques 3 peuvent être espacées de la paroi formant le réservoir 1 sur au moins une partie de leur périphérie.

Les plaques 2, 3 sont de préférence constituées d'un matériau léger et/ou isolant thermiquement. Cependant, l'ensemble de plaques 2, 3 peut le cas échéant servir de structure pour la tenue du réservoir 1, permettant ainsi d'alléger ce dernier. Les plaques 2, 3 peuvent par exemple être liées mécaniquement au réservoir 1 via soudure (si métallique) et/ou serrage et/ou vissage.

Les plaques 2, 3 peuvent être constituées par exemple de PTFE, PCTFE, aluminium et/ou tout autre matériau approprié. L'épaisseur des plaques 2, 3 peut être comprise entre 0,1mm et 1mm par exemple.

Tout ou partie des plaques 2, 3 peut comporter des découpes pour le passage de tuyauteries ou autre éléments, et notamment pour l'emboîtement ou la fixation des plaques horizontales 2 dans les plaques 3 verticales.

Des perçages 15 peuvent être prévus les premières plaques 2 horizontales pour permettre une meilleure circulation du liquide du haut vers le bas du réservoir 1.

La combinaison du système de pressurisation et de l'ensemble de plaques 2, 3 permet d'éloigner la molécule de son point de vapeur saturante notamment au niveau du point de soutirage qui alimente la pompe 5. Ceci reste efficace même lorsque le dispositif 14 est embarqué sur un engin mobile générant ayant des mouvements du fluide dans le réservoir. L'invention permet de garantir une meilleure pression de gavage évitant les cavitations dans la pompe 5. Il y a ainsi une réduction du risque de désamorçage du circuit d'admission de la pompe depuis le réservoir 1.

La structure précitée permet donc de limiter la propagation des calories vers le bas du réservoir 1 mais aussi de limiter les mouvements de liquide pour améliorer la stratification dans le réservoir (et améliorer le NPSH de la pompe).

L'invention permet une amélioration des performances de la pompe 5 (notamment une réduction du poids et du prix), ainsi qu'une augmentation de sa durée de vie.

L'ensemble du dispositif 14 peut être plus compact (pas besoin de ménager une grande hauteur manométrique).

Les conduites 4 ou lignes d'admission peuvent être simplifiées (absence d'organe pour retirer les bulles) et pas ou peu de risque de bulles piégées au niveau des vannes 12.

L'invention permet en outre une réduction des effets de balourd (inertie) du réservoir 1.

## Revendications

1. Dispositif de de stockage et de fourniture de fluide cryogénique, notamment d'hydrogène liquéfié, comprenant un réservoir (1) délimitant un volume de stockage de fluide, le réservoir (1) comprenant un ensemble de plaques (2, 3) prévu pour limiter ou guider le déplacement de fluide dans le réservoir (1), l'ensemble de plaques comprenant une pluralité de premières plaques (2) espacées verticalement et s'étendant selon une direction horizontale lorsque le réservoir (1) est en position d'utilisation, le dispositif comprenant en outre un circuit de soutirage comprenant une conduite (4) de soutirage de liquide ayant une première extrémité reliée à une portion inférieure du réservoir (1) et une seconde extrémité destinée à être reliée à un organe de réception du fluide, le dispositif comprenant en outre un système de pressurisation du réservoir comprenant une conduite (11, 8) de pressurisation de fluide reliant les parties inférieure et supérieure du réservoir (1) et munie d'un organe (10, 7) de réchauffage de fluide configuré pour prélever du liquide, le réchauffer et le réinjecter dans le réservoir (1), **caractérisé en ce que** la conduite (4) de soutirage de liquide comprend une pompe (5) et **en ce que** l'ensemble de plaques (2, 3) comprend en outre une ou plusieurs secondes plaques (3) s'étendant selon une direction verticale lorsque le réservoir (1) est en position d'utilisation et reliée(s) aux premières plaques, et en ce l'espacement vertical des premières plaques (2) est croissant du haut vers le bas du réservoir (1).

2. Dispositif selon la revendication 1, **caractérisé en ce qu'**il comprend une pluralité de secondes plaques (3) espacées selon la direction horizontale.

3. Dispositif selon la revendication 1 ou 2, caractérisé en ce les premières plaques (2) s'étendent sur une majorité de la section horizontale du volume du réservoir (1) et sont espacées de la paroi formant le réservoir (1) sur au moins une partie de leur périphérie.

4. Dispositif selon l'une quelconque des revendications 1 à 3, **caractérisé en ce que** la ou les secondes plaques (3) s'étendent sur une majorité de la section verticale du volume du réservoir (1) et sont espacées de la paroi formant le réservoir (1) sur au moins une partie de leur périphérie.

5. Dispositif selon l'une quelconque des revendications 1 à 4, **caractérisé en ce que** les plaque (2, 3) ont une épaisseur comprise entre 0,1mm et 1mm.

6. Dispositif selon l'une quelconque des revendications 1 à 5, **caractérisé en ce que** les plaque (2, 3) sont composées de l'un au moins des matériaux parmi : plastique, PTFE, PCTFE, aluminium, inox, acier austénitique notamment compatibles avec l'hydrogène.

7. Dispositif selon l'une quelconque des revendications 1 à 6, **caractérisé en ce qu'**au moins une partie des plaques (2, 3) comportent des orifices (15).

8. Dispositif selon l'une quelconque des revendications 1 à 7, **caractérisé en ce que** l'ensemble de plaques (2, 3) est fixé rigidement au réservoir (1) par exemple par l'un au moins parmi : soudage, serrage, vissage.

## Patentansprüche

1. Vorrichtung zur Speicherung und Zufuhr eines kryogenen Fluids, insbesondere von verflüssigtem Wasserstoff, umfassend einen Behälter (1), der ein Fluidspeichervolumen begrenzt, wobei der Behälter (1) einen Satz von Platten (2, 3) umfasst, der dazu vorgesehen ist, die Bewegung des Fluids im Behälter (1) zu begrenzen oder zu leiten, wobei der Satz von Platten eine Vielzahl von ersten Platten (2) umfasst, die vertikal beabstandet sind und sich in einer horizontalen Richtung erstrecken, wenn sich der Behälter (1) in der Gebrauchsposition befindet, wobei die Vorrichtung ferner einen Entnahmekreislauf umfasst, der eine Flüssigkeitsentnahmeleitung (4) aufweist, die ein erstes Ende hat, das mit einem unteren Abschnitt des Behälters (1) verbunden ist, und ein zweites Ende, das dazu bestimmt ist, mit einem Fluidaufnahmeorgan verbunden zu werden, wobei die Vorrichtung ferner ein Druckbeaufschlagungssystem für den Behälter umfasst, das eine Fluiddruckbeaufschlagungsleitung (11, 8) aufweist, die die unteren und oberen Teile des Behälters (1) verbindet und mit einem Fluidaufheizorgan (10, 7) versehen ist, das konfiguriert ist, um Flüssigkeit zu entnehmen, sie zu erwärmen und in den Behälter (1) zurückzuspritzen, **dadurch gekennzeichnet, dass** die Flüssigkeitsentnahmeleitung (4) eine Pumpe (5) umfasst und dass der Satz von Platten (2, 3) ferner eine oder mehrere zweite Platten (3) umfasst, die sich in einer vertikalen Richtung erstrecken, wenn sich der Behälter (1) in der Gebrauchsposition befindet, und mit den ersten Platten verbunden ist/sind, und dass der vertikale Abstand der ersten Platten (2) von oben nach unten des Behälters (1) zunimmt.

2. Vorrichtung nach Anspruch 1, **dadurch gekennzeichnet, dass** sie eine Vielzahl von zweiten Platten (3) umfasst, die in horizontaler Richtung beabstandet sind.

3. Vorrichtung nach Anspruch 1 oder 2, **dadurch gekennzeichnet, dass** sich die ersten Platten (2) über einen Großteil des horizontalen Querschnitts des Volumens des Behälters (1) erstrecken und von der den Behälter (1) bildenden Wand über mindestens einen Teil ihres Umfangs beabstandet sind.

4. Vorrichtung nach einem der Ansprüche 1 bis 3, **dadurch gekennzeichnet, dass** sich die zweite Platte oder die zweiten Platten (3) über einen Großteil des vertikalen Querschnitts des Volumens des Behälters (1) erstrecken und von der den Behälter (1) bildenden Wand über mindestens einen Teil ihres Umfangs beabstandet sind.

5. Vorrichtung nach einem der Ansprüche 1 bis 4, **dadurch gekennzeichnet, dass** die Platten (2, 3) eine Dicke zwischen 0,1 mm und 1 mm aufweisen.

6. Vorrichtung nach einem der Ansprüche 1 bis 5, **dadurch gekennzeichnet, dass** die Platten (2, 3) aus mindestens einem der folgenden Materialien bestehen: Kunststoff, PTFE, PCTFE, Aluminium, Edelstahl, insbesondere austenitischer Stahl, der mit Wasserstoff verträglich ist.

7. Vorrichtung nach einem der Ansprüche 1 bis 6, **dadurch gekennzeichnet, dass** mindestens ein Teil der Platten (2, 3) Öffnungen (15) aufweist.

8. Vorrichtung nach einem der Ansprüche 1 bis 7, **dadurch gekennzeichnet, dass** der Satz von Platten (2, 3) starr am Behälter (1) befestigt ist, beispielsweise durch mindestens eines von: Schweißen, Klemmen, Schrauben.

## Claims

1. A device for storing and supplying a cryogenic fluid, in particular liquefied hydrogen, comprising a reservoir (1) defining a fluid storage volume, the reservoir (1) comprising a set of plates (2, 3) intended to limit or guide the movement of fluid in the reservoir (1), the set of plates comprising a plurality of first plates (2) vertically spaced and extending in a horizontal direction when the reservoir (1) is in the use position, the device further comprising a withdrawal circuit comprising a liquid withdrawal line (4) having a first end connected to a lower portion of the reservoir (1) and a second end intended to be connected to a fluid receiving member, the device further comprising a reservoir pressurization system comprising a fluid pressurization line (11, 8) connecting the lower and upper parts of the reservoir (1) and provided with a fluid reheating member (10, 7) configured to draw off liquid, reheat it and reinject it into the reservoir (1), **characterized in that** the liquid withdrawal line (4) comprises a pump (5) and **in that** the set of plates (2, 3) further comprises one or more second plates (3) extending in a vertical direction when the reservoir (1) is in the use position and connected to the first plates, and **in that** the vertical spacing of the first plates (2) increases from the top to the bottom of the reservoir (1).

2. The device according to claim 1, **characterized in that** it comprises a plurality of second plates (3) spaced in the horizontal direction.

3. The device according to claim 1 or 2, **characterized in that** the first plates (2) extend over a majority of the horizontal section of the volume of the reservoir (1) and are spaced from the wall forming the reservoir (1) over at least a part of their periphery.

4. The device according to any one of claims 1 to 3, **characterized in that** the second plate or plates (3) extend over a majority of the vertical section of the volume of the reservoir (1) and are spaced from the wall forming the reservoir (1) over at least a part of their periphery.

5. The device according to any one of claims 1 to 4, **characterized in that** the plates (2, 3) have a thickness comprised between 0.1 mm and 1 mm.

6. The device according to any one of claims 1 to 5, **characterized in that** the plates (2, 3) are composed of at least one of the materials from among: plastic, PTFE, PCTFE, aluminum, stainless steel, austenitic steel in particular compatible with hydrogen.

7. The device according to any one of claims 1 to 6, **characterized in that** at least a part of the plates (2, 3) comprise orifices (15).

8. The device according to any one of claims 1 to 7, **characterized in that** the set of plates (2, 3) is rigidly fixed to the reservoir (1), for example, by at least one from among: welding, clamping, screwing.
